# EUROPEAN PATENT APPLICATION

(11) **EP 2 763 015 A1**
(43) Date of publication of application: **06.08.2014**
(21) Application number: 13153234.3
(22) Date of filing: 30.01.2013
(51) Int. Cl.: G06F 3/0482, G06F 3/0483, G06F 3/0488

(54) **A method of and system for displaying a list of items on an electronic device**

(71) Applicant: Rightware Oy, 02200 Espoo (FI)
(72) Inventor: Rantonen, Aleksi, 02200 Espoo (FI)
(74) Representative: Seppo Laine Oy

(57) **Abstract**

A method of displaying a list of items on an electronic device is provided, the method comprising the steps of retrieving a plurality of items to be displayed to a user, displaying the plurality of items as a list on a display screen of the electronic device, wherein the list is displayed in a perspective view with items closer to a first edge of the display screen being shown in the foreground and being comparatively larger than items closer to a second, opposite edge of the display screen which are shown in a background, and tilting at least one of the items in the list which is displayed closer to the second edge, towards a vertical orientation by a first angle relative to the perspective view of the list. In this embodiment, a portion of the list being displayed on the display screen may define the first edge corresponding to the edge of the display screen closest to the user, with the second edge corresponding to the edge of the display screen furthest from the user.

## Description

### FIELD OF THE INVENTION

This invention relates to a method of and system for displaying a plurality of items on an electronic device. In particular, this invention relates to displaying the items as a list on a mobile electronic device, and to the scrolling of the list across a display screen of the electronic device.

### BACKGROUND TO THE INVENTION

All mobile electronic devices nowadays have a screen to display a wide range of information, including lists of information stored on the device, such as a list of contacts, for example. There are numerous ways of displaying lists on the screen, but typically they comprise displaying (and scrolling, in most cases) each item in the list as a fixed two-dimensional block of content. This fixed representation of each item in the list may, especially in the case of long lists, result in a user missing or overlooking a desired item in the list when it is scrolling.

The aim of the present invention is thus to provide a method of and a system for displaying a list of items, and in particular, for modifying the display of items within the list, so as to temporarily enhance their visibility to a user scrolling through the list.

### SUMMARY OF THE INVENTION

According to a first aspect of the invention, there is provided a method of displaying a list of items on an electronic device, the method comprising the steps of;
- retrieving a plurality of items to be displayed to a user,
- displaying the plurality of items as a list on a display screen of the electronic device, wherein the list is displayed in a perspective view with items closer to a first edge of the display screen being shown in the foreground and being comparatively larger than items closer to a second, opposite edge of the display screen which are shown in a background, and
- tilting at least one of the items in the list which is displayed closer to the second edge, towards a vertical orientation by a first angle relative to the perspective view of the list.

In this embodiment, a portion of the list being displayed on the display screen may define the first edge corresponding to the edge of the display screen closest to the user, with the second edge corresponding to the edge of the display screen furthest from the user.

In an embodiment, the step of tilting at least one of the items may include tilting a last item displayed in the list in the vertical orientation.

In an embodiment, the first angle may be variable so as to result in a corresponding variable vertical orientation, in use.

In an embodiment, the step of tilting at least one of the items in the list may comprise tilting the list items gradually from the second edge to the first edge, with the second edge corresponding to the item that has been tilted the most, and the first edge corresponding to the item that has been tilted the least, if at all.

In an embodiment, the item adjacent the second edge may get pushed backwards further into the background, prior to the subsequent item being tilted towards the vertical orientation by the first angle

In an embodiment, a top edge of an item proximate the first edge is flush with a bottom edge of an adjacent item.

In an embodiment, each list item may define a pseudo tilt axis, with the tilt axis being provided at a top edge, a middle portion or a bottom edge of each item.

In an embodiment, the items on the list may be displayed such that there is a spacing between adjacent items, the spacing in an embodiment being constant throughout the list. Alternatively, the list is continuous such that there is no spacing between adjacent items of the list.

In an embodiment, the list of items to be displayed may be stored on the electronic device, with the list of items being selected from a group comprising contact details, emails, SMS messages and photographs.

In an embodiment, the electronic device may comprise a mobile communication device.

In an embodiment, the mobile communication device may be a smart phone.

In an embodiment, the method may further comprise the steps of;
- detecting a scrolling request from the user to scroll the list of items from the first edge towards the second edge, and
- tilting at least one item which is nearing the second edge towards a vertical orientation by a second variable angle relative to the perspective view of the list.

In an embodiment, the second angle is inversely proportional to the distance between the item and the second edge, as the item approaches the second edge. Alternatively, or in addition, the second angle is inversely proportional to the number of items between the item to be tilted and the second edge, as the item approaches the second edge.

In an embodiment, the method may further comprise the steps of;
- detecting a scrolling request from the user to scroll the list of items from the second edge to towards the first edge, and
- tilting at least one item which is nearing the first edge towards a substantially flat orientation from a more vertical orientation by a third variable angle relative to the perspective view of the list.

In an embodiment, the third angle is inversely proportional to the distance between the item and the first edge, as the item approaches the first edge. Alternatively, or in addition the third angle is inversely proportional to the number of items between the item to be tilted and the first edge, as the item approaches the first edge.

The scrolling request may be initiated by a user swiping his / her finger across the display screen. Alternatively, or in addition, the scrolling request may be initiated by a user tilting the electronic device.

According to a second aspect of the invention, there is provided a system for displaying a list of items on an electronic device, the system comprising;
- a retriever module operable to retrieve a plurality of items to be displayed to a user,
- a display module to display the plurality of items as a list, on a display screen of the electronic device, wherein the list is displayed in a perspective view with items closer to a first edge of the display screen being shown in the foreground and being comparatively larger than items closer to a second, opposite edge of the display screen which are shown in a background, and
- a tilt module operable to tilt at least one of the items in the list displayed closer to the second edge, towards a vertical orientation by a first angle relative to the perspective view of the list of items.

In an embodiment, a portion of the list being displayed on the display screen may define the first edge corresponding to the edge of the display screen closest to the user, with the second edge corresponding to the edge of the display screen furthest from the user.

In an embodiment, the tilt module may tilt a last item displayed in the list in the vertical orientation.

In an embodiment, the first angle may be variable so as to results in corresponding variable vertical orientation, in use.

In an embodiment, the tilt module may tilt the list items gradually from the second edge to the first edge, with the second edge corresponding to the list item that has been tilted the most, and the first edge corresponding to the list item that has been tilted the least, if at all.

According to a third aspect of the invention, there is provided a system for displaying a list of items on an electronic device, the system comprising a processor that is arranged to;
- retrieve a plurality of items to be displayed to a user,
- display the plurality of items as a list on a display screen of the electronic device, wherein the list is displayed in a perspective view with items closer to a first edge of the display screen being shown in the foreground and being comparatively larger than items closer to a second, opposite edge of the display screen which are shown in a background, and
- tilt at least one of the items in the list displayed closer to the second edge, towards a vertical orientation by a first angle relative to the perspective view of the list of items.

According to a fourth aspect of the invention, there is provided a non-transitory computer readable medium having stored thereon a set of computer readable instructions for causing a processor to display a list of items on an electronic device comprising the computer implemented steps of;
- retrieving a plurality of items to be displayed to a user,
- displaying the plurality of items as a list on a display screen of the electronic device, wherein the list is displayed in a perspective view with items closer to a first edge of the display screen being shown in the foreground and being comparatively larger than items closer to a second, opposite edge of the display screen which are shown in a background, and
- tilting at least one of the items in the list displayed closer to the second edge, towards a vertical orientation by a first angle relative to the perspective view of the list of items.

According to a fifth aspect of the invention, there is provided an electronic device incorporating either of the systems defined above.

### BRIEF DESCRIPTION OF THE DRAWINGS

The invention will be described, by way of example only, with reference to the accompanying drawings in which:
Figure 1 shows a high level schematic view of a system for displaying a list of items on an electronic device, according to an embodiment of the present invention,
Figure 2 shows a schematic view of an electronic device for displaying a list of items according to an example embodiment of the present invention, and associated X and Z axes about which the device may be rotated to display the list of items,
Figure 3 shows a flowchart representing a method of displaying a list of items on an electronic device, according to yet a further aspect of the present invention, and
Figure 4 shows a representation of a list of items on an electronic device, in use.

### DETAILED DESCRIPTION OF PREFERRED EMBODIMENTS

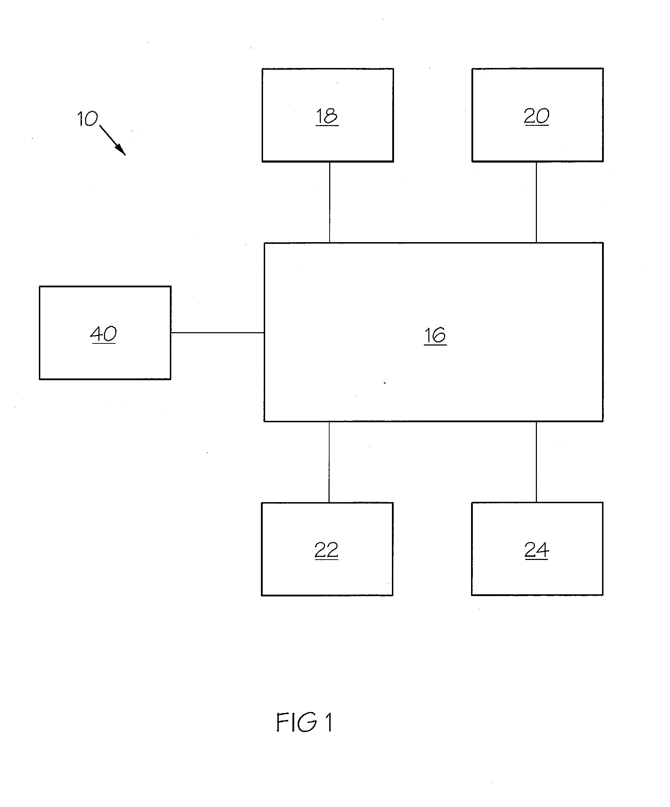

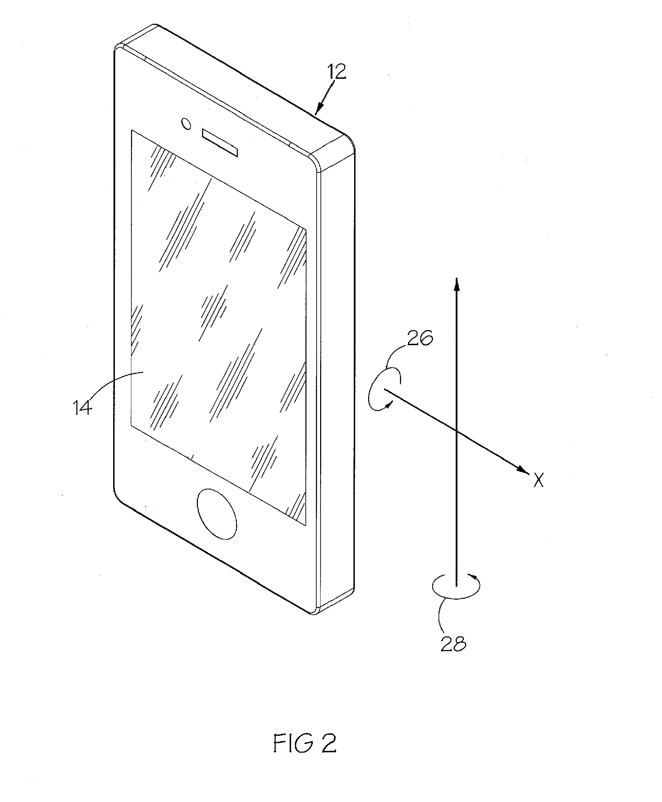

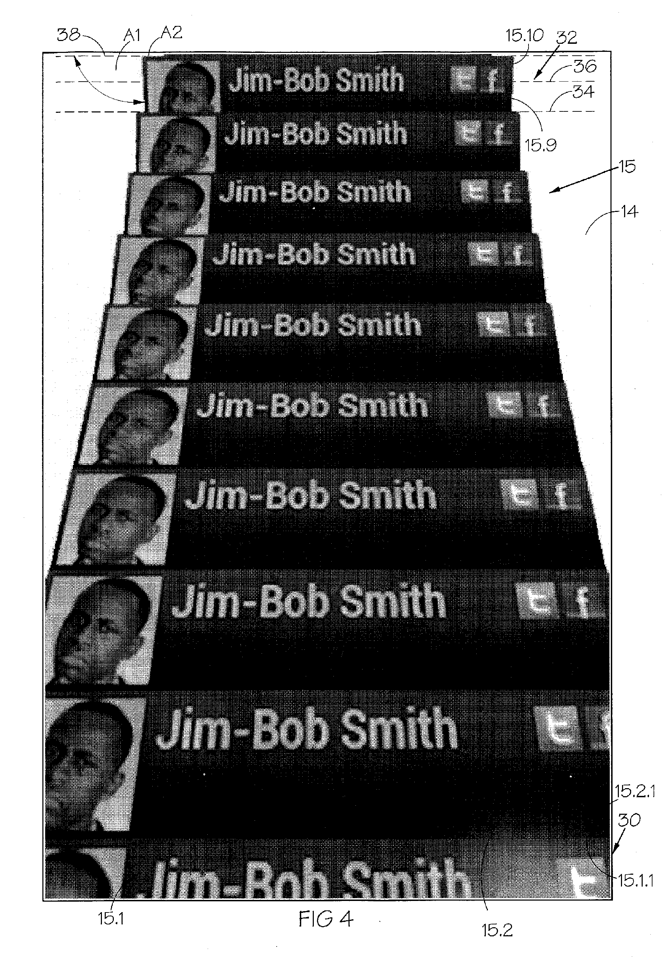

In broad terms, and with particular reference to Figures 1, 2 and 4, Figure 1 shows a system 10 for displaying a list of items on an electronic device 12 having a display screen 14, such as of the type shown in Figure 2, with an example of items 15.1 - 15.n being shown in Figure 4. The electronic device 12 is typically a mobile communication device such as a smart phone 12. In other embodiments, the electronic device can be a personal computing device or a Personal Digital Assistant (PDA).

The system 10 comprises a processor 16 that is connected or connectable to a retriever module 18 to retrieve a plurality of items 15.1 - 15.n to be displayed to a user. The processor 16 is also connected or connectable to a display module 20 to display the items 15.1 - 15.n as a list 15, on the display screen 14 of the device 12. The processor 16 is also connected or connectable to a tilt module 22, the tilt module 22 being configured to tilt at least one of the list items 15.1 - 15.n into a vertical orientation relative to a perspective view of the list items 15.

In an embodiment, the list 15 comprises a multiplicity of items 15.1 - 15.n. As best shown in Figure 4, a portion of the list 15 displayed on the display screen 14 defines a first edge 30, corresponding to the edge of the display 14 closest to the user as the device 14 is being used, and a second edge 32, corresponding to the edge of the display screen 14 furthest from the user as the device 12 is being used. Each item on the list 15 can be spaced apart from a subsequent adjacent item 15.1 - 15.n. In the illustrated embodiment, however, the list of items is continuous in that the items are not spaced apart from each other. The list 15 of items 15.1 - 15.n to be displayed may be stored on the electronic device 12, with the list of items being selected from a group comprising emails, SMS messages and photographs and contact details (as illustrated in Figure 4). In particular, the system 10 can include a data store 40 to store the list 15 of items to be displayed, with the list 15 of items being selected from a group comprising contact details, emails, SMS messages and photographs.

The retriever module 18 retrieves the plurality of items 15.1 - 15.n to be displayed to the user on the device 12. In turn, the display module 20 displays the plurality of items in the form of a list on the display screen 14 of the device 12. The list 15 is displayed in a perspective view, with the items 15.1 - 15.n closer to a first edge 30 of the display screen 14 being shown in the foreground and being comparatively larger than items closer to the second, opposite edge 32 of the display screen 14, which are shown in a background.

The tilt module 22 tilts at least one of the items 15.1 - 15.n in the list 15 displayed closer to the second edge 32, towards a vertical orientation by a first angle indicated as A1. Angle A1 is relative to the perspective view of the list 15 of items 15.1 - 15.n. In particular, the tilt module 22 tilts a last item 15.10 displayed in the list in the vertical orientation. However, the angle A1 is variable and thus results in corresponding variable vertical orientations, in use. As shown in Figure 4, the displayed list 15 can represent a half full book shelf, for example, where item 15.10 is in a vertical orientation and the preceding items 15.9 - 15.1 are shown gradually less vertical, with item 15.1 being substantially flat. Thus the degree of vertical orientation decreases in relation to the items 15.10 - 15.1, that is, from the items closer to the second edge 32 towards the items closer to the first edge 30. The list items 15.1 - 15.n are tilted gradually from the second edge 32 to the first edge 30. As shown in Figure 4, the second edge 32 corresponds to the list item 15.10 that has been tilted the most, and the first edge 30 corresponds to the list item 15.1 that has been tilted the least, if at all. This embodiment shows an effective manner of tilting the list of items and providing a more prominent display of the list of items.

The list items 15.1 - 15.n are tilted such that at least a partial top portion 15.1.1 of the item 15.1 which is adjacent the first edge 30 is flush with a bottom portion 15.2.1 of a subsequent item 15.2. However, even if the top portion 15.1.1 of the item 15.1 which is close to the first edge 30 is flush with a bottom portion 15.2.1 of a subsequent item 15.2, the information contained in the items is not lost, and so the readability of the items 15.1, 15.2 is not lost to the reader. Each list item 15.1 - 15.n defines a pseudo tilt axis, with the tilt axis being provided at a top edge 38, a middle portion 36 or a bottom edge 34 of each list item, for example, as shown in item 15.10.

The displaying of the items in the form of a list 15, as shown in Figure 4, facilitates the user scrolling through the list 15. The user can scroll through the list 15, in any one of a number of conventional ways, while searching for a particular contact name on the contact list, for example.

In an embodiment, the invention detects a scrolling request from the user to scroll the list of items from the first edge 30 towards the second edge 32. As described above, the tilt module 22 tilts at least one item which is nearing the second edge 32 towards a vertical orientation by a second variable angle A2 relative to the perspective view of the list 15.

The second angle may be inversely proportional to the distance between the relevant item and the second edge 32, as the item approaches the second edge 32. In other words, the closer the item is to the second edge 32, the greater the tilt angle, and vice versa. In addition, or alternatively, the second angle may be inversely proportional to the number of items between the item to be tilted and the second edge 32, as the item approaches the second edge.

In another embodiment, the invention detects a scrolling request from the user to scroll the list of items from the second edge 32 to towards the first edge 30. The tilt module 22 may accordingly tilt at least one item which is nearing the first edge 30 towards a substantially flat orientation from a more vertical orientation by a third variable angle relative to the perspective view of the list 15. Again, the third angle may be inversely proportional to the distance between the item and the first edge 30, as the item approaches the first edge 30. Alternatively, or in addition, the third angle is proportional to the number of items between the item to be tilted and the first edge 30, as the item approaches the first edge 30.

The detection of the scrolling request may be implemented in a number of ways, using various types of sensors. For example, the scrolling request may be initiated by a user swiping his / her finger across the display screen.

Alternatively, the scrolling request may be initiated by a user tilting the electronic device, with, for example, a motion sensing component 24 within the device 12 detecting tilting of the device 12 by the user, with the tilting corresponding to a scrolling request from the user to scroll the list of items 15 across the display screen 14. In this embodiment, the motion sensing component 24 typically comprises an accelerometer and a gyroscope. As best shown in Figure 2, the device 12 may be tilted along either the X-axis (as indicated by arrow 26) or the Z-axis (as indicated by arrow 28). The list 15 in Figure 4 shows rotation about the X-axis, but it is envisaged that the list 15 may be tilted about the Z-axis, in which case the list 15 would scroll from left to right (and vice versa) across the display screen 14.

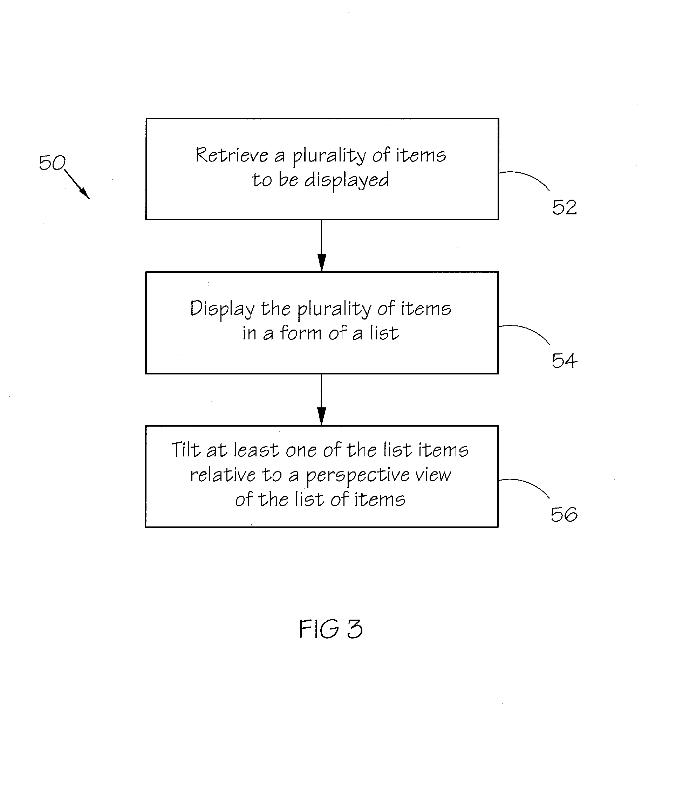

Turning now to Figure 3, a method 50 of displaying a list of items on an electronic device is shown. The method 50 comprises the steps of retrieving a plurality of items to be displayed to a user, as indicated by block 52, and displaying the plurality of items in a form of a list on a display screen 14, as indicated by block 54. The list is displayed in a perspective view with items closer to a first edge 30 of the display screen 14 being shown in the foreground and being comparatively larger than items closer to a second, opposite edge 32 of the display screen 14 which are shown in a background. The method 50 further comprises the step of tilting at least one of the items in the list displayed closer to the second edge, towards a vertical orientation by a first angle relative to the perspective view of the list of items, at block 56.

The invention as exemplified thus displays a list of items such that the items appearing on the screen are displayed more prominently, thus increase the readability of the list items.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method of displaying a list of items on an electronic device, the method comprising the steps of;
- retrieving a plurality of items to be displayed to a user,
- displaying the plurality of items as a list on a display screen of the device, wherein the list is displayed in a perspective view with items closer to a first edge of the display screen being shown in the foreground and being comparatively larger than items closer to a second, opposite edge of the display screen which are shown in a background, and
- tilting at least one of the items in the list which is displayed closest to the second edge towards a vertical orientation by a first angle relative to the perspective view of the list.

2. The method of claim 1, wherein a portion of the list being displayed on the display screen defines the first edge corresponding to the edge of the display screen closest to the user, with the second edge corresponding to the edge of the display screen furthest from the user.

3. The method of any preceding claim, wherein the step of tilting at least one of the items includes tilting a last item displayed in the list towards the vertical orientation.

4. The method of any preceding claim, wherein the first angle is variable so as to result in a corresponding variable vertical orientation, in use.

5. The method of any preceding claim, wherein the step of tilting at least one of the items in the list comprises tilting the items gradually from the second edge to the first edge, with the second edge corresponding to the item that has been tilted the most, and the first edge corresponding to the item that has been tilted the least, if at all.

6. The method of any preceding claim, wherein the item adjacent the second edge is pushed backwards further into the background, prior to the subsequent item being tilted towards the vertical orientation by the first angle.

7. The method of any preceding claim, wherein each item in the list defines a pseudo tilt axis, with the tilt axis being provided at a top edge, a middle section or a bottom edge of each item.

8. The method of any preceding claim, wherein the items on the list is displayed such that there is a spacing between adjacent items.

9. The method of any preceding claim, wherein the list is continuous such that there is no spacing between adjacent items of the list.

10. The method of claim 1, further comprising;
- detecting a scrolling request from the user to scroll the list of items from the first edge towards the second edge, and
- tilting at least one item which is nearing the second edge towards a vertical orientation by a second variable angle relative to the perspective view of the list.

11. The method of claim 1, further comprising;
- detecting a scrolling request from the user to scroll the list of items from the second edge to towards the first edge, and
- tilting at least one item which is nearing the first edge towards a substantially flat orientation from a more vertical orientation by a third variable angle relative to the perspective view of the list.

12. The method of either claim 10 or 11, wherein the scrolling request is initiated by a user swiping his / her finger across the display screen.

13. The method of either claim 10 or 11, wherein the scrolling request is initiated by a user tilting the electronic device.

14. A system for displaying a list of items on an electronic device, the system comprising;
- a retriever module operable to retrieve a plurality of items to be displayed to a user,
- a display module to display the plurality of items as a list, on a display screen of the electronic device, wherein the list is displayed in a perspective view with items closer to a first edge of the display screen being shown in the foreground and being comparatively larger than items closer to a second, opposite edge of the display screen which are shown in a background, and
- a tilt module operable to tilt at least one of the items in the list displayed closer to the second edge, towards a vertical orientation by a first angle relative to the perspective view of the list of items.

15. A non-transitory computer readable medium having stored thereon a set of computer readable instructions for causing a processor to display a list of items on an electronic device comprising the computer implemented steps of;
- retrieving a plurality of items to be displayed to a user,
- displaying the plurality of items as a list on a display screen of the electronic device, wherein the list is displayed in a perspective view with items closer to a first edge of the display screen being shown in the foreground and being comparatively larger than items closer to a second, opposite edge of the display screen which are shown in a background, and
- tilting at least one of the items in the list displayed closer to the second edge, towards a vertical orientation by a first angle relative to the perspective view of the list of items.

## Amended claims

### Amended claims in accordance with Rule 137(2) EPC.

**1.** A method (50) of displaying a list of items on an electronic device (12), the method comprising the steps of;
- retrieving (52) a plurality of items (15) to be displayed to a user,
- displaying (54) the plurality of items as a list on a display screen (14) of the device, wherein the list is displayed in a perspective view with items closer to a first edge (30) of the display screen (14) being shown in the foreground and being comparatively larger than items closer to a second, opposite edge of the display screen (32) which are shown in a background, and
- tilting (56) at least one of the items in the list which is displayed closest to the second edge (32) towards a vertical orientation by a first angle relative to the perspective view of the list,
**characterised in that** the tilting comprises that a top edge (38) of the at least one tilted item is raised, wherein the degree of vertical orientation due to the tilting decreases toward the first edge (30).

**2.** The method of claim 1, wherein a portion of the list being displayed on the display screen defines the first edge corresponding to the edge of the display screen closest to the user, with the second edge corresponding to the edge of the display screen furthest from the user.

**3.** The method of any preceding claim, wherein the step of tilting at least one of the items includes tilting a last item displayed in the list towards the vertical orientation.

**4.** The method of any preceding claim, wherein the first angle is variable so as to result in a corresponding variable vertical orientation, in use.

**5.** The method of any preceding claim, wherein the step of tilting at least one of the items in the list comprises tilting the items gradually from the second edge to the first edge, with the second edge corresponding to the item that has been tilted the most, and the first edge corresponding to the item that has been tilted the least, if at all.

**6.** The method of any preceding claim, wherein the item adjacent the second edge is pushed backwards further into the background, prior to the subsequent item being tilted towards the vertical orientation by the first angle.

**7.** The method of any preceding claim, wherein each item in the list defines a pseudo tilt axis, with the tilt axis being provided at a top edge, a middle section or a bottom edge of each item.

**8.** The method of any preceding claim, wherein the items on the list is displayed such that there is a spacing between adjacent items.

**9.** The method of any preceding claim, wherein the list is continuous such that there is no spacing between adjacent items of the list.

**10.** The method of claim 1, further comprising;
- detecting a scrolling request from the user to scroll the list of items from the first edge towards the second edge, and
- tilting at least one item which is nearing the second edge towards a vertical orientation by a second variable angle relative to the perspective view of the list.

**11.** The method of claim 1, further comprising;
- detecting a scrolling request from the user to scroll the list of items from the second edge to towards the first edge, and
- tilting at least one item which is nearing the first edge towards a substantially flat orientation from a more vertical orientation by a third variable angle relative to the perspective view of the list.

**12.** The method of either claim 10 or 11, wherein the scrolling request is initiated by a user swiping his / her finger across the display screen.

**13.** A system (10) for displaying a list of items on an electronic device (12), the system comprising;
- a retriever module (18) operable to retrieve a plurality of items to be displayed to a user,
- a display module (20) to display the plurality of items as a list, on a display screen (14) of the electronic device (12), wherein the list is displayed in a perspective view with items closer to a first edge (30) of the display screen being shown in the foreground and being comparatively larger than items closer to a second, opposite edge (32) of the display screen which are shown in a background, and
- a tilt module (22) operable to tilt at least one of the items in the list displayed closer to the second edge (32), towards a vertical orientation by a first angle relative to the perspective view of the list of items,
**characterised in that** the tilt module is operable to tilt the at least one tilted item by raising a top edge (38) of the at least one tilted item, wherein the degree of vertical orientation due to the tilting decreases toward the first edge (30).

**14.** A non-transitory computer readable medium having stored thereon a set of computer readable instructions for causing a processor to display a list of items on an electronic device (12) comprising the computer implemented steps of;
- retrieving a plurality of items (15) to be displayed to a user,
- displaying the plurality of items (15) as a list on a display screen (14) of the electronic device (12), wherein the list is displayed in a perspective view with items closer to a first edge (30) of the display screen (14) being shown in the foreground and being comparatively larger than items closer to a second, opposite edge (32) of the display screen (14) which are shown in a background, and
- tilting at least one of the items in the list displayed closer to the second edge (32), towards a vertical orientation by a first angle relative to the perspective view of the list of items,
**characterised in that** the tilting comprises that a top edge (38) of the at least one tilted item is raised, wherein the degree of vertical orientation due to the tilting decreases toward the first edge (30).

**15.** The non-transitory computer readable medium of claim 14, wherein the item closest to the first edge is tilted the least.

**1.** A method (50) of displaying a list of items on an electronic device (12), the method comprising the steps of;
- retrieving (52) a plurality of items (15) to be displayed to a user,
- displaying (54) the plurality of items as a list on a display screen (14) of the device, wherein the list is displayed in a perspective view with items closer to a first edge (30) of the display screen (14) being shown in the foreground and being comparatively larger than items closer to a second, opposite edge of the display screen (32) which are shown in a background, and
- tilting (56) at least one of the items in the list which is displayed closest to the second edge (32) towards a vertical orientation by a first angle relative to the perspective view of the list,
**characterised in that** the tilting comprises that a top edge (38) of the at least one tilted item is raised, wherein the degree of vertical orientation due to the tilting decreases toward the first edge (30), wherein the item closest to the first edge is tilted the least.

**2.** The method of claim 1, wherein a portion of the list being displayed on the display screen defines the first edge corresponding to the edge of the display screen closest to the user, with the second edge corresponding to the edge of the display screen furthest from the user.

**3.** The method of any preceding claim, wherein the step of tilting at least one of the items includes tilting a last item displayed in the list towards the vertical orientation.

**4.** The method of any preceding claim, wherein the first angle is variable so as to result in a corresponding variable vertical orientation, in use.

**5.** The method of any preceding claim, wherein the step of tilting at least one of the items in the list comprises tilting the items gradually from the second edge to the first edge, with the second edge corresponding to the item that has been tilted the most, and the first edge corresponding to the item that has been tilted the least, if at all.

**6.** The method of any preceding claim, wherein the item adjacent the second edge is pushed backwards further into the background, prior to the subsequent item being tilted towards the vertical orientation by the first angle.

**7.** The method of any preceding claim, wherein each item in the list defines a pseudo tilt axis, with the tilt axis being provided at a top edge, a middle section or a bottom edge of each item.

**8.** The method of any preceding claim, wherein the items on the list is displayed such that there is a spacing between adjacent items.

**9.** The method of any preceding claim, wherein the list is continuous such that there is no spacing between adjacent items of the list.

**10.** The method of claim 1, further comprising;
- detecting a scrolling request from the user to scroll the list of items from the first edge towards the second edge, and
- tilting at least one item which is nearing the second edge towards a vertical orientation by a second variable angle relative to the perspective view of the list.

**11.** The method of claim 1, further comprising;
- detecting a scrolling request from the user to scroll the list of items from the second edge to towards the first edge, and
- tilting at least one item which is nearing the first edge towards a substantially flat orientation from a more vertical orientation by a third variable angle relative to the perspective view of the list.

**12.** The method of either claim 10 or 11, wherein the scrolling request is initiated by a user swiping his / her finger across the display screen.

**13.** A system (10) for displaying a list of items on an electronic device (12), the system comprising;
- a retriever module (18) operable to retrieve a plurality of items to be displayed to a user,
- a display module (20) to display the plurality of items as a list, on a display screen (14) of the electronic device (12), wherein the list is displayed in a perspective view with items closer to a first edge (30) of the display screen being shown in the foreground and being comparatively larger than items closer to a second, opposite edge (32) of the display screen which are shown in a background, and
- a tilt module (22) operable to tilt at least one of the items in the list displayed closer to the second edge (32), towards a vertical orientation by a first angle relative to the perspective view of the list of items,
**characterised in that** the tilt module is operable to tilt the at least one tilted item by raising a top edge (38) of the at least one tilted item, wherein the degree of vertical orientation due to the tilting decreases toward the first edge (30), wherein the item closest to the first edge is tilted the least.

**14.** A non-transitory computer readable medium having stored thereon a set of computer readable instructions for causing a processor to display a list of items on an electronic device (12) comprising the computer implemented steps of;
- retrieving a plurality of items (15) to be displayed to a user,
- displaying the plurality of items (15) as a list on a display screen (14) of the electronic device (12), wherein the list is displayed in a perspective view with items closer to a first edge (30) of the display screen (14) being shown in the foreground and being comparatively larger than items closer to a second, opposite edge (32) of the display screen (14) which are shown in a background, and
- tilting at least one of the items in the list displayed closer to the second edge (32), towards a vertical orientation by a first angle relative to the perspective view of the list of items,
**characterised in that** the tilting comprises that a top edge (38) of the at least one tilted item is raised, wherein the degree of vertical orientation due to the tilting decreases toward the first edge (30), wherein the item closest to the first edge is tilted the least.
